# EUROPEAN PATENT SPECIFICATION

(11) **EP 3 061 672 B1**
(45) Date of publication and mention of the grant of the patent: **18.04.2018**
(21) Application number: 16155203.9
(22) Date of filing: 11.02.2016
(51) Int. Cl.: B62D 7/14

(54) **A HYDRAULIC STEERING CYLINDER**
EIN HYDRAULISCHES LENKZYLINDER
UN VÉRIN HYDRAULIQUE DE DIRECTION

(30) Priority: 27.02.2015 IT RE20150013
(43) Date of publication of application: 31.08.2016
(73) Proprietor: OGNIBENE POWER S.P.A., 42124 Reggio Emilia (IT)
(72) Inventor: OGNIBENE, CLAUDIO, 42100 REGGIO EMILIA (IT)
(74) Representative: Corradini, Corrado

(56) References cited:
- EP-A2- 2 343 229
- DE-U1-202010 006 812

## Description

### TECHNICAL FIELD

The present invention relates to a double-acting hydraulic cylinder, in particular a double-acting hydraulic cylinder for steering and/or self-centring axles (for example rear axles), for example a steering axle and/or a self-centring axle of a heavy vehicle, a trailer or the like, such as disclosed in EP 2 343 229.

### PRIOR ART

A hydraulic cylinder according to the preamble of claim 1 is shown in document DE 20 2010 006 812 U.

In practice, the double-acting hydraulic cylinder for steering axles disclosed in the aforementioned document comprises a cylindrical jacket provided with a first axial portion in which at least a piston slides axially, the piston being fixed to a command rod able to project axially out of the cylindrical jacket, and a second axial portion, in which a centring pad of the piston slides axially, in which the first axial portion and the second axial portion are axially separated by an abutting element able to define an abutting surface for the centring pad.

In these cylinders, however, the realisation of the abutting element for the centring pad, i.e. an internal annular abutment in the cylindrical jacket, is defined by a milling, or another mechanical operation for removing shavings, made in the cavity of the cylindrical jacket.

Therefore, in order to realise the abutting element precision working operations are necessary on the cylindrical jacket, which involve work costs, expenses for the producer and an increase in times for the manufacturing of the hydraulic cylinder.

An aim of the present invention is to obviate the above-mentioned drawbacks in the prior art, with a solution that is simple, rational and relatively inexpensive.

The aims are attained by the characteristics of the invention as recited in the independent claim. The dependent claims delineate preferred and/or particularly advantageous aspects of the invention.

### DESCRIPTION OF THE INVENTION

The invention relates in particular to a double-acting hydraulic cylinder for steering axles which comprises a cylindrical jacket provided with a first axial portion in which at least a piston slides axially, the piston being fixed to a command rod able to project axially out of the cylindrical jacket, and a second axial portion, in which a centring pad of the piston slides axially, in which the first axial portion and the second axial portion are axially separated by an abutting element able to define an abutting surface for the centring pad.

According to the invention the abutting element comprises a cylindrical body which exhibits an external diameter which is smaller than an internal diameter of the cylindrical jacket and an internal diameter that is smaller than an external diameter of at least an abutting surface of the centring pad and which is inserted internally of the cylindrical jacket, so that a free end thereof defines an abutment for the abutting surface of the centring pad.

With this solution, the manufacturing of the hydraulic cylinder is facilitated and made more rapid with respect to the hydraulic cylinders of known type.

In an aspect of the invention, the cylindrical body further exhibits an axial length that is substantially equal to the axial length of the first axial portion of the cylindrical jacket and is located internally of the cylindrical jacket in such a way as to internally clad substantially all of the first axial portion.

Further, the piston is inserted substantially snugly internally of the cylindrical body in such a way as be able to slide internally thereof and to subdivide the internal volume of the first axial portion into a first chamber and a second chamber, separated and having a variable volume.

In this way, the internal surface of the cylindrical body defines a continuous dragging surface, rectified for the piston.

In a further aspect of the invention, the hydraulic cylinder of the invention comprises at least an annular seal interposed between the cylindrical jacket and the cylindrical body.

In this way, the hermetic seal between the cylindrical jacket and the cylindrical body is guaranteed. The invention further comprises an annular chamber defined between the cylindrical body and the cylindrical jacket, which annular chamber communicates with the internal volume of the cylindrical body, which for example places the annular chamber in communication with one of the chambers into which the internal volume of the cylindrical body is subdivided.

In a further aspect of the invention, the centring pad can be substantially snugly inserted internally of the second axial portion of the cylindrical jacket so as to be able to slide internally thereof and to subdivide the internal volume of the second axial portion into two further chambers, separate from one another and having variable volumes.

With this solution, the activation of the centring pad can be done via a single through-hole through which the fluid enters and exits.

The centring pad can advantageously be associated slidably on the stem and, for example, the hydraulic cylinder comprises a sleeve axially slidable along the cylindrical jacket and flanked to the centring pad on a side of the centring pad facing towards the first axial portion, wherein the sleeve exhibits an external diameter that is smaller than the internal diameter of the cylindrical body such as to be insertable for at least an axial portion thereof internally of the cylindrical body, the sleeve defining an axial abutment for the piston, for example at least in an intermediate zone of the first axial portion, when the abutting surface of the centring pad is in contact with the abutting surface of the cylindrical body, and in an abutting position of the piston, when the centring pad is in a respective endrun position distal from the cylindrical body.

In a further aspect of the invention, a steering axle is provided which comprises at least a pair of steering hubs, and at least a hydraulic cylinder, as described above, wherein the hubs are activated to steer by the rod of the hydraulic cylinder.

### BRIEF DESCRIPTION OF THE DRAWINGS

Further characteristics and advantages of the invention will emerge from a reading of the following description, provided by way of non-limiting example, with the aid of the figures of the accompanying drawings.

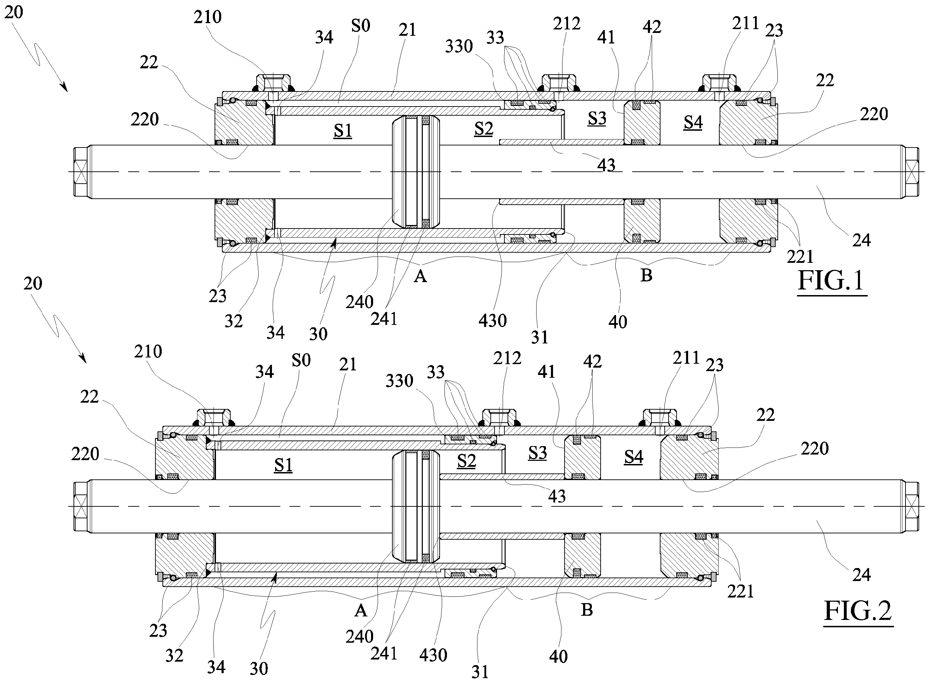

Figure 1 is a longitudinal section of a hydraulic cylinder according to the invention in a first operating position.
Figure 2 is a longitudinal section of the hydraulic cylinder of figure 1 according to the invention in a second operating position.
Figure 3 is a longitudinal section of the hydraulic cylinder of figure 1 according to the invention in a third operating position.
Figure 4 is a longitudinal section of the hydraulic cylinder of figure 1 according to the invention in a fourth operating position.
Figure 5 is a longitudinal section of the hydraulic cylinder of figure 1 according to the invention in a fifth operating position.
Figure 6 is a longitudinal section of the hydraulic cylinder of figure 1 according to the invention in a sixth operating position.
Figure 7 is a schematic view from above of a steering axle provided with the hydraulic cylinder according to the invention.

### BEST WAY OF CARRYING OUT THE INVENTION

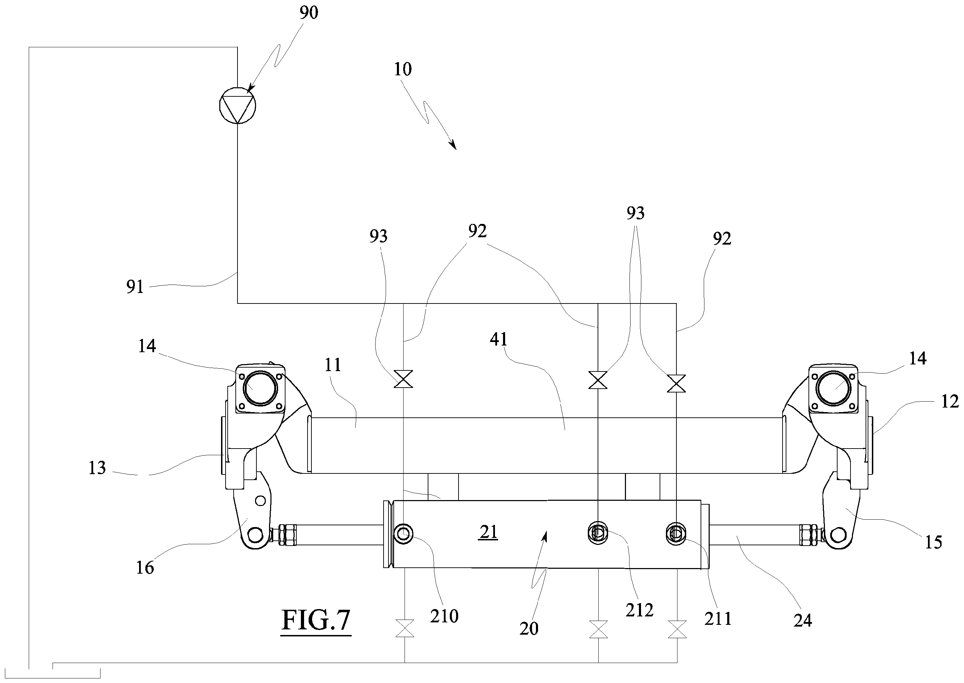

With particular reference to figure 7, reference numeral 10 denotes in its entirety a steering axle, for example a rear axle.

The axle 10 comprises a support cross member 11, rigid and, for example, substantially straight.

A hub 12,13, being respectively a right hub 12 and a left hub 13, is rotatably associated to each of the ends of the support cross member 11, with respect to a horizontal axis.

Each hub 12,13 is hinged to the end of the support cross member 11, by means of a respective joint 14 able to rotate the hubs 12,13 with respect to a substantially vertical steering axis.

The joints 14 shown in the figures are dealigned in plan view with respect to the horizontal rotation axis of the wheels, though the steering angle could also be incident with the rotation axis of the wheels and superposed thereon in plan view.

A steering lever, respectively a left lever 15 and a right lever 16, is fixed to each hub 12,13, which levers 15,16 develop longitudinally on a perpendicular plane to the steering axle.

The axle 10 comprises a hydraulic cylinder 20, as will be more fully described in the following, which can command the steering of the hubs 12,13.

The hydraulic cylinder 20, as shown in particular in figures from 1 to 5, comprises a cylindrical jacket 21 that is hollow, for example having a thin wall.

The cylindrical jacket 21 exhibits a constant thickness along all the longitudinal development.

The cylindrical jacket 21 is closed at the opposite ends by respectively closing discs 22, for example by means of interposing of appropriate seal rings 23.

At least one of the closing discs 22 (in the example both) defines a central hole 220 from which a rod 24 projects, slidably and sealedly associated, by means of an interposing of second seal rings 221, internally of the central hole 220 of the closing disc 22.

The rod 24 in the example exhibits a greater length than the length of the cylindrical jacket 21, so as to be able to project from both the ends thereof, through the respective central holes 220 made in the opposite closing discs 22.

The free ends of the rod 24 are able each to be hinged to one of the steering levers 15,16.

In practice, the stem 24 of the hydraulic cylinder 20 in this configuration defines a centring bar for the axle 10, which is substantially non-extensible and is therefore able to maintain the rotation axes of the hubs 12 and 13 parallel to one another during the steering.

A piston 240 is splined in an intermediate zone of the rod 24, which is substantially ring-conformed with an external diameter that is smaller than the internal diameter of the cylindrical jacket 21, so as to be able to be inserted with play internally thereof and to slide along the longitudinal axis of the cylindrical jacket 21.

A plurality of through-holes 210,211,212 are made on the cylindrical jacket 21, which are axially distanced along the longitudinal axis of the cylindrical jacket 21 and for example have substantially radial through-axes.

Each through-hole 210,211,212 is preferably provided with a connection fitting located externally of the cylindrical jacket.

Each through-hole 210,211,212 is made in a zone of the cylindrical jacket 21 that is axially internal with respect to the closing discs 22, so as to open into the internal volume of the cylindrical jacket delimited axially by the closing discs 22.

In the example, the cylindrical jacket 21 comprises a first end through-hole 210 made in proximity of an end of the cylindrical jacket 21.

Further, the cylindrical jacket 21 comprises a second end through-hole 211 made in proximity of the other end of the cylindrical jacket 21.

Further, the cylindrical jacket 21 comprises a third axially-intermediate through-hole 212, made in a substantially central zone in an axial direction of the cylindrical jacket 21.

For the purposes of the present invention, the hydraulic cylinder 20 comprises a hollow cylindrical cavity 30 which has a smaller external diameter than the internal diameter of the cylindrical jacket 21.

The cylindrical body 30 has for example a slim thickness, for example substantially equal to the thickness of the cylindrical jacket 21.

The cylindrical body 30, for example, has a constant thickness along all the longitudinal development.

The cylindrical body 30 is inserted internally of a first axial portion A, for example an end portion, of the cylindrical jacket 21, for example coaxially.

In practice, the cylindrical body 30 has a smaller length than the length of the cylindrical jacket 21, for example substantially 2/3 the length of the cylindrical jacket 21 itself, so as to occupy a smaller axial space (about 2/3) than the internal axial size of the cylindrical jacket 21, axially delimited by the closing discs 22.

The cylindrical body 30 axially subdivides the cylindrical jacket 21 into two consecutive axial portions A,B, in which the first axial portion A is internally clad by the cylindrical body 30 and the second axial portion B (not clad by the cylindrical body 30) is delimited axially by the free end 31 of the cylindrical body 30 and by one of the closing discs 22.

In the example, the cylindrical body 30 comprises the opposite end 32 to the free end 31 constrained, for example by means of welding, to one of the closing discs 22, for example the disc located in proximity of the first through-hole 210.

In practice, the cylindrical body 30, when located internally of the cylindrical jacket 21, defines the first axial portion A of the cylindrical jacket 21 itself as an internal zone of the hydraulic cylinder 20 having a smaller internal diameter (defined by the internal diameter of the cylindrical body 30) and the second axial portion B of the cylindrical jacket 21, as an internal zone of the hydraulic cylinder 20 having a larger internal diameter (defined by the internal diameter of the cylindrical jacket 21).

For example, the first axial portion A of the cylindrical jacket 21 is substantially comprised axially between the first through-hole 210 and the third through-hole 212, while the second axial portion B is substantially axially comprised between the third through-hole 212 and the second through-hole 211.

In the example, the cylindrical body 30 is inserted internally of the cylindrical jacket 21, with (abundant) radial play, but it might also be inserted substantially snugly or with slight interference.

For example, at least an annular seal 33 is interposed between the cylindrical body 30 and the cylindrical jacket 21, which annular seal 33, for example, can be radially compressed between the cylindrical body 30 and the cylindrical jacket 21.

For example, the annular seal 33 can be inserted in an annular hollow fashioned in a packing gland 330 interposed between the cylindrical body 30 and the cylindrical jacket 21.

A plurality of annular seals 33 are shown in the example, for example having a quadrangular and/or a round section.

The annular seal 33 is for example interposed between an end portion of the cylindrical body 30 located in proximity of the free end 31 thereof and a central portion of the cylindrical jacket 21 interposed axially between the third through-hole 212 and the first through-hole 211.

In practice, when the cylindrical body 30 exhibits an external diameter that is smaller than the internal diameter of the cylindrical jacket 21, for example even by a quantity that is substantially equal to or slightly smaller than the thickness of one from between the cylindrical body and the cylindrical jacket 21, an annular chamber S0 is defined between the cylindrical body 30 and the cylindrical jacket 21.

The cylindrical body 30 further comprises a through-opening 34 exhibiting a substantially radial through-axis.

The through-opening 34, for example, is realised in a zone of the cylindrical body 30 close to the opposite end 32, for example substantially superposed and/or aligned to the first through-hole 210.

For example, the cylindrical body 30 might exhibit a plurality of through-openings 34, for example located on an imaginary circumference coaxial to the cylindrical body 30 (for example equidistant).

In practice, the annular chamber S0 communicates with the internal volume of the cylindrical body 30 via at least the through-opening 34.

In practice, the piston 240 is able to slide along the first axial portion A internally of the cylindrical body 30, comprised between the free end 31 and the opposite end 32 thereof, between two end abutting positions which will be more fully described in the following.

The piston 240 is for example substantially snugly inserted internally of the cylindrical body 30, for example by means of at least a seal and sliding ring 241 (for example two in number).

In practice, the piston 240 is able to subdivide the first axial portion A into two chambers, respectively a first chamber S1 and a second chamber S2, which have variable volumes, according to the position of the piston 240 along the longitudinal axis of the first axial portion, and separate from one another (substantially sealedly from one another).

The first chamber S1 is axially delimited between the closing disc 22 constrained to the opposite end 32 of the cylindrical body 30 and the face of the piston 240 facing toward the closing disc 22.

The second chamber S2 is axially delimited between the other face of the piston 240, facing towards the second axial portion B, and the free end 31 of the cylindrical body 30.

The second chamber S2, in the example, communicates with the second axial portion B (at least a chamber into which it is subdivided as will be more fully explained in the following) via the open free end 31 of the cylindrical body 30.

At least one of the axial ends of the piston 240 (in the example both) exhibits bevellings able to define a small uncovered axial portion of the face of the piston 240 even when the face is in contact with one of the closing discs 22 (i.e. the disc in proximity of the opposite end 32 of the cylindrical body 30). The hydraulic cylinder 20 further comprises a centring pad 40, which for example comprises an annular body 41 exhibiting an external diameter that is smaller than the internal diameter of the cylindrical jacket 21 and greater than the internal diameter of the cylindrical body 30 and an internal diameter that is greater than the external diameter of the rod 24.

The centring pad 40 is inserted internally of the cylindrical jacket 21 slidably along the second axial portion B thereof.

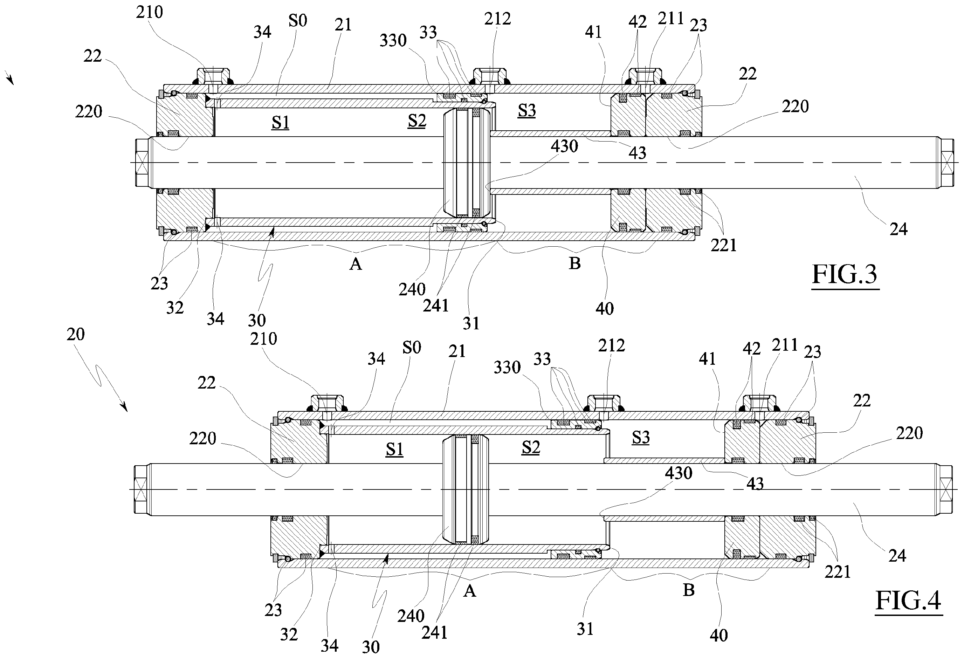

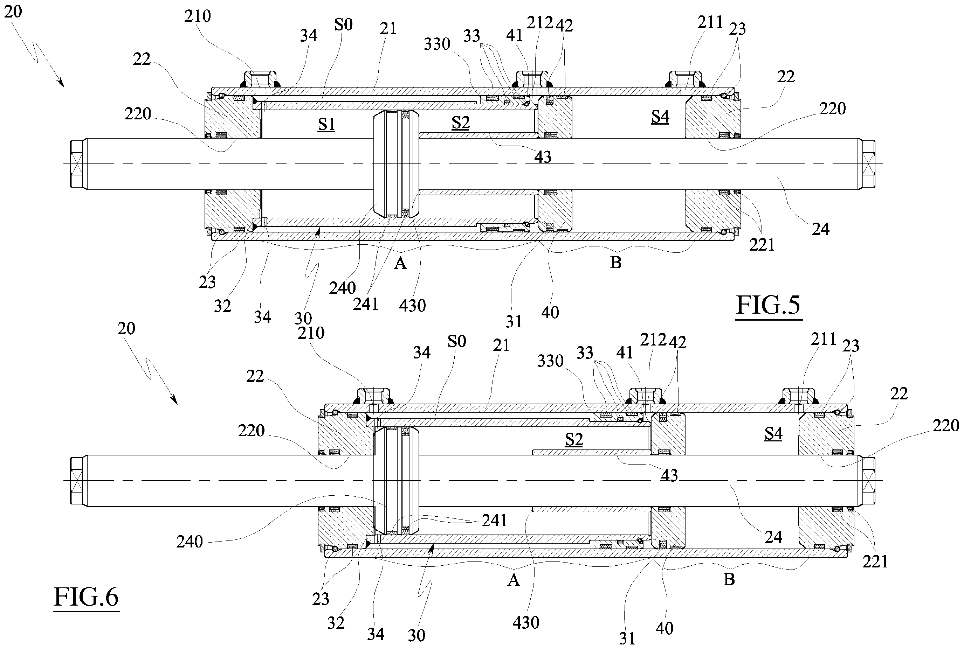

The centring pad 40 is mobile alternatingly between two endrun positions, of which:
- a first endrun position (see figures 5 and 6) in which an abutting surface 41 of the centring pad 40 defined at the face of the centring pad 40 facing towards the first axial portion A is in contact with the free end 31 of the cylindrical body 30, and
- a second endrun position (see figures 3 and 4) in which the opposite face (to the face provided with the abutting surface 41) of the centring pad 40 is in contact with the closing disc 22 (distal from the cylindrical body 30) delimiting the second axial portion B.

In practice, the free end 31 of the tubular body 30 defines an abutment for the abutting surface 41 of the centring pad 40 during the travel thereof from the end of the cylindrical jacket 21 towards the centre thereof.

At least one of the axial ends of the centring pad 40 (in the example both) exhibits bevellings able to define a minimum uncovered axial portion of the face of the centring pad 40 including when the face is in contact with one of the closing discs 22 (i.e. the disc 22 distal to the cylindrical body 30).

The centring pad 40 is for example substantially snugly inserted internally of the cylindrical body 30, for example by means of at least a further seal and sliding ring 42 (for example two in number).

In practice, the centring pad 40 is able to subdivide the second axial portion B into two chambers, respectively a third chamber S3 and a fourth chamber S4, which have variable volumes, according to the position of the centring pad 40 along the longitudinal axis of the first axial portion, and separate from one another (substantially sealedly from one another).

The fourth chamber S4 is axially contained between the closing disc 22 delimiting the second axial portion B and the face of the piston 40 facing toward the closing disc 22.

The third chamber S3 is axially delimited between the face of the centring pad 40 provided with the abutting surface 41 and facing towards the first axial portion A, and the free end 31 of the cylindrical body 30.

In the example, the third chamber S3 communicates with the second chamber S2 via the free open end 31 of the cylindrical body 30.

The centring pad 40 exhibits an external diameter that is smaller than the external diameter of the piston 240 and substantially the same internal diameter.

At least a face of the centring pad 40 (i.e. the one facing towards the closing disc 22 distal from the cylindrical body 30) advantageously exhibits a greater area than at least a face of the piston 240 (i.e. the one facing towards the closing disc 22 proximal to the opposite end 32 of the cylindrical body 30). The hydraulic cylinder 20 comprises a sleeve 43 for example fixed (though not necessarily) to the centring pad 40, which is inserted internally of the cylindrical jacket 21 and/or the cylindrical body 30, slidably along the axial direction.

In the example, the sleeve 43 is flanked to the centring pad 40, for example facing in an axial direction, on the side thereof provided with an abutting surface 41, i.e. on the part facing towards the first axial portion A.

The sleeve 43 in practice extends axially beyond the lie plane of the abutting surface 41, for example so that the free end 430 thereof (distal from the centring pad 40) is distant from the abutting surface 41 by a distance at least equal to the permitted travel of the centring pad 40 in the second axial portion B (i.e. between the above-mentioned first and second endrun position thereof).

In practice, when the centring pad 40 is in the second endrun position the free end 430 of the sleeve 43 is substantially flush to the free end 31 of the cylindrical body 30.

The sleeve 43 has an external diameter which is smaller than the internal diameter of the cylindrical body 30 so as to be insertable (with abundant radial play) for at least an axial portion internally of the cylindrical body. Further, the sleeve 43 has an internal diameter that is greater than the diameter of the rod 24, so as to be splinable with radial play thereon and to be able to slide along the longitudinal axis of the rod 24.

The sleeve 43 defines an axial abutment for the piston 240, in practice the free end 430 of the sleeve 43 defines a contact surface able to contact a portion of the face of the piston 240 facing towards the second axial portion B.

For example, when the centring pad 40 is in the second endrun position the free end 430 of the sleeve 43 (flush to the free end 31 of the cylindrical body 30) defines a first abutting position of the piston 240 (see figure 3).

In this abutting position of the piston 240 the second chamber S2 exhibits a minimum volume and the first chamber S1 exhibits a maximum volume. Further, when the centring pad 40 is in the first endrun position the free end 430 of the sleeve is internal of the cylindrical body 30 (in an axially intermediate zone thereof) at a distance from the free end 31 of the cylindrical body 30 (substantially equal to the maximum travel the centring pad 40 can make, i.e. half the run the piston 240 can make, and defines a second abutting position of the piston 240 (see figure 5).

In this second abutting position of the piston 240 the second chamber S2 exhibits a volume equal to the volume of the first chamber S1.

The piston 240 is, also, positionable in a third abutting position, shown in figure 6 (independently of the position of the sleeve 43 and/or the centring pad 40), in which the face of the piston 240 facing towards the opposite end 32 of the cylindrical body 30 is in contact with the closing disc 22 (constrained to the opposite end 32).

In this third abutting position of the piston 240 the first chamber S1 exhibits a minimum volume and the second chamber S2 exhibits a maximum volume. In use, the through-holes 210,211,212 are able to set the chambers S1,S2,S3 and S4 in communication, internal of the hydraulic cylinder 20 with a fluid supply circuit, for example pressurised oil, which can be injected internally of the chambers for movement of the piston 240 (and the stem 24) and/or the centring pad 40, as will be more fully described in the following. The supply circuit comprises, for example schematically, a pumping element 90, which is able to supply pressurised oil into a piping 91. The piping 91 is provided, for example, with three branches 92, for example provided with valve means 93 for selectively opening and closing the branches 92 and appropriate recycling means (not illustrated) able to be connected respectively to fittings defining the through-holes 210,211,212.

In the light of what is described above, the functioning of the hydraulic cylinder 20 is for example the following.

When the piston 240 is in the second abutting position thereof the hubs 12 and 13 are in the straight advanced/retracted position thereof, i.e. they are in a non-steered position.

In order to steer the hubs 12 and 13, in the supply circuit it is sufficient to actuate the piston 240 in translation in one direction or another between the first abutment position and the third abutting position thereof.

In practice, in order to steer in a first steering direction it is sufficient to supply pressurised fluid through the first through-hole 210.

The fluid injected internally of the cylindrical jacket 21 first fills the annular chamber S0 and then, through the through-hole 34, enters the first chamber S1 and pushes the piston towards the first abutting position thereof.

In practice, if the centring pad 40 is in a different position from the second endrun position thereof, the movement of the piston 240 draws with it the centring pad 40 towards the second endrun position thereof, where it will remain up to when it is differently actuated and where the free end 430 of the sleeve 43 defines an abutment for the piston 240 in the first abutting position. The quantity of fluid which is displaced by the movement of the piston 240 (corresponding to the volume of the second chamber S2) is displaced from the second chamber S2, for example through the third chamber S3, towards the third through-hole 212 from which it exits.

In order to actuate the steering into a second (and opposite) steering direction it is sufficient to supply pressurised fluid into the hydraulic cylinder 20 through the third through-hole 212.

The fluid injected internally of the cylindrical jacket 21 from the third through-hole 212 enters the second chamber S2 (and/or the third chamber S3) and pushes the piston towards the third abutting position thereof.

The quantity of fluid which is displaced by the movement of the piston 240 (corresponding to the volume of the first chamber S1) is displaced from the first chamber S1 first towards the annular chamber S0 through the through-opening 34 and then towards the first through-hole 210 from which it exits. Lastly, in order to return the hubs into the non-steered position (for example when it is necessary to block it in the non-steered position the hubs 12,13 i.e. in the reverse conditions of the vehicle), i.e. the piston into the second abutting position, it is sufficient to operate the supply circuit in such a way that pressurised fluid is injected into the hydraulic cylinder 20, for example contemporaneously through the first through-hole 210 and the second through-hole 211.

In practice, if the piston 240 is in a different position from the second abutting position it is pushed by the pressurised fluid which enters the first chamber S1 and by the fluid which enters the fourth chamber S4, through the movement imposed by the fluid on the centring pad 40 and the sleeve 43, towards a second abutting position where it is retained.

In practice, the fluid entering the second through-hole 211 pushes the centring pad 40 and the sleeve 43 from the first endrun position thereof to the second endrun position thereof, where it makes available an abutment for the piston 240 in the second endrun position thereof.

This movement of the centring pad 40 towards the second endrun position is made possible (given a same pressure of the fluid in the first chamber S1 and the fourth chamber S4) by the greater area of the face of the centring pad 40 (facing towards the respective closing disc 22) with respect to the area of the face of the piston 240 (facing towards the respective closing disc 22).

The excess volume of fluid present in the second chamber S2 and in the third chamber S3 exits through the third through-hole 212.

The invention as it is conceived is susceptible to numerous modifications, all falling within the scope of the appended claims. Further, all the details can be replaced with other technically-equivalent elements.

In practice the materials used, as well as the contingent shapes and dimensions, can be any according to requirements, without forsaking the scope of protection of the following claims.

## Claims

1. A double-acting hydraulic cylinder (20) for steering or self-centring axles which comprises a cylindrical jacket (21) provided with a first axial portion (A) in which at least a piston (240) slides axially, the piston (240) being fixed to a command rod (24) able to project axially out of the cylindrical jacket (21), and a second axial portion (B), in which a centring pad (40) of the piston (240) slides axially, in which the first axial portion (A) and the second axial portion (B) are axially separated by an abutting element able to define an abutting surface for the centring pad (40), wherein the abutting element comprises a cylindrical body (30) which exhibits an external diameter which is smaller than an internal diameter of the cylindrical jacket (21) and an internal diameter that is smaller than an external diameter of at least an abutting surface (41) of the centring pad (40) and which is inserted internally of the cylindrical jacket (21), so that a free end (31) thereof defines an abutment for the abutting surface (41) of the centring pad (40) **characterised in that** an annular chamber (S0) is defined between the cylindrical body (30) and the cylindrical jacket (21), which annular chamber (S0) communicates with the internal volume of the cylindrical body (30) via at least a radial through-opening (34) realized in the cylindrical body (30).

2. The hydraulic cylinder (20) of claim 1, wherein the cylindrical body (30) exhibits an axial length that is substantially equal to the axial length of the first axial portion (A) of the cylindrical jacket (21) and is located internally of the cylindrical jacket (21) in such a way as to internally clad substantially all of the first axial portion (A).

3. The hydraulic cylinder (20) of claim 1 or 2, wherein the piston (240) is inserted substantially snugly internally of the cylindrical body (30) in such a way as be able to slide internally thereof and to subdivide the internal volume of the first axial portion (A) into a first chamber (S1) and a second chamber (S2), separated and having a variable volume.

4. The hydraulic cylinder (20) of any one of the preceding claims, **characterised in that** it comprises at least an annular seal (33) interposed between the cylindrical jacket (21) and the cylindrical body (30).

5. The hydraulic cylinder (20) of claim 1, wherein the through-hole (34) is able to place the annular chamber (S0) in communication with one from between the first chamber (S1) and the second chamber (S2).

6. The hydraulic cylinder (20) of any one of the preceding claims, wherein the centring pad (40) is substantially snugly inserted internally of the second axial portion (B) of the cylindrical jacket (21) so as to be able to slide internally thereof and to subdivide the internal volume of the second axial portion into a third chamber (S3) and a fourth chamber (S4), separate from one another and having variable volumes.

7. The hydraulic cylinder (20) of any one of the preceding claims, wherein the centring pad (40) is slidably associated on the rod (24).

8. The hydraulic cylinder (20) of any one of the preceding claims, **characterised in that** it comprises a sleeve (43) axially slidable along the cylindrical jacket (21) and flanked to the centring pad (40) on a side of the centring pad (40) facing towards the first axial portion (A), wherein the sleeve (43) exhibits an external diameter that is smaller than the internal diameter of the cylindrical body (30) such as to be insertable for at least an axial portion thereof internally of the cylindrical body (30), the sleeve (43) defining an axial abutment for the piston (240).

9. A steering axle (10) which comprises at least a pair of steering hubs (12, 13), **characterised in that** it comprises at least a hydraulic cylinder (20) according to any one of the preceding claims, wherein the hubs (12, 13) are activated to steer by the rod (24) of the hydraulic cylinder (20).

## Patentansprüche

1. Doppeltwirkender Hydraulikzylinder (20) für Lenk- oder selbstzentrierende Achsen, der einen zylindrischen Mantel (21) umfasst, welcher mit einem ersten axialen Abschnitt (A) versehen ist, in dem mindestens ein Kolben (22) axial gleitet, wobei der Kolben (240) an einer gemeinsamen Stange (24) befestigt ist, die in der Lage ist, axial aus dem zylindrischen Mantel (21) hervorzustehen, und mit einem zweiten axialen Abschnitt (B), in dem ein Zentrierungsblock (40) des Kolbens (240) axial gleitet, in dem der erste axiale Abschnitt (A) und der zweite axiale Abschnitt (B) durch ein Anschlagelement axial getrennt sind, das in der Lage ist, eine Anschlagfläche für den Zentrierungsblock (40) zu definieren, wobei das Anschlagelement einen zylindrischen Körper (30) umfasst, der einen Außendurchmesser aufweist, der kleiner als ein Innendurchmesser des zylindrischen Mantels (21) ist, und einen Innendurchmesser, der kleiner als ein Außendurchmesser mindestens einer Anschlagfläche (41) des Zentrierungsblocks (40) ist, und der in das Innere des zylindrischen Mantels (21) eingesetzt ist, so dass ein freies Ende (31) davon einen Anschlag für die Anschlagfläche (41) des Zentrierungsblocks (40) definiert, **dadurch gekennzeichnet, dass** eine ringförmige Kammer (S0) zwischen dem zylindrischen Körper (30) und dem zylindrischen Mantel (21) definiert ist, wobei die ringförmige Kammer (S0) mit dem Innenvolumen des zylindrischen Körpers (30) über mindestens eine radiale Durchgangsöffnung (34), die in dem zylindrischen Körper (30) realisiert ist, in Verbindung steht.

2. Hydraulikzylinder (20) nach Anspruch 1, wobei der zylindrische Körper (30) eine axiale Länge aufweist, die im Wesentlichen gleich der axialen Länge des ersten axialen Abschnitts (A) des zylindrischen Mantels (21) ist und sich im Inneren des zylindrischen Mantels (21) befindet, so dass er im Wesentlichen den gesamten ersten axialen Abschnitt (A) innen auskleidet.

3. Hydraulikzylinder (20) nach Anspruch 1 oder 2, wobei der Kolben (240) im Wesentlichen eng anliegend in das Innere des zylindrischen Körpers (30) eingesetzt ist, so dass er in der Lage ist, in dessen Innerem zu gleiten und das Innenvolumen des ersten axialen Abschnitts (A) in eine erste Kammer (S1) und eine zweite Kammer (S2) zu unterteilen, die getrennt sind und ein variables Volumen haben.

4. Hydraulikzylinder (20) nach einem der vorhergehenden Ansprüche, **dadurch gekennzeichnet, dass** er mindestens eine ringförmige Dichtung (33) umfasst, die zwischen den zylindrischen Mantel (21) und den zylindrischen Körper (30) eingelegt ist.

5. Hydraulikzylinder (20) nach Anspruch 1, wobei die Durchgangsöffnung (34) in der Lage ist, eine Verbindung der ringförmigen Kammer (S0) mit der ersten Kammer (S1) oder der zweiten Kammer (S2) herzustellen.

6. Hydraulikzylinder (20) nach einem der vorhergehenden Ansprüche, wobei der Zentrierungsblock (40) im Wesentlichen eng anliegend in das Innere des zweiten axialen Abschnitts (B) des zylindrischen Mantels (21) eingesetzt ist, so dass er in der Lage ist, in dessen Innerem zu gleiten und das Innenvolumen des zweiten axialen Abschnitts in eine dritte Kammer (S3) und eine vierte Kammer (S4) zu unterteilen, die getrennt sind und ein variables Volumen haben.

7. Hydraulikzylinder (20) nach einem der vorhergehenden Ansprüche, wobei der Zentrierungsblock (40) gleitfähig mit der Stange (24) verbunden ist.

8. Hydraulikzylinder (20) nach einem der vorhergehenden Ansprüche, **dadurch gekennzeichnet, dass** er eine Hülse (43) umfasst, die axial entlang des zylindrischen Mantels (21) gleitfähig ist und von dem Zentrierungsblock (40) auf einer Seite des Zentrierungsblocks (40) flankiert wird, die dem ersten axialen Abschnitt (A) zugewandt ist, wobei die Hülse (43) einen Außendurchmesser aufweist, der kleiner als der Innendurchmesser des zylindrischen Körpers (30) ist, so dass sie zumindest über einen axialen Abschnitt ihrer selbst in das Innere des zylindrischen Körpers (30) einsetzbar ist, wobei die Hülse (43) einen axialen Anschlag für den Kolben (240) definiert.

9. Lenkachse (10), die mindestens ein Paar Lenknaben (12, 13) umfasst, **dadurch gekennzeichnet, dass** sie mindestens einen Hydraulikzylinder (20) nach einem der vorhergehenden Ansprüche umfasst, wobei die Naben (12, 13) durch die Stange (24) des Hydraulikzylinders (20) zum Lenken aktiviert werden.

## Revendications

1. Cylindre hydraulique à double action (20) pour des axes de direction ou à centrage automatique
qui comprend une gaine cylindrique (21) dotée d'une première partie axiale (A) dans laquelle au moins un piston (240) coulisse axialement, le piston (240) étant fixé à une tige de commande (24) capable de se projeter axialement hors de la gaine cylindrique (21), et d'une seconde partie axiale (B), dans laquelle un tampon de centrage (40) du piston (240) coulisse axialement, dans lequel la première partie axiale (A) et la seconde partie axiale (B) sont axialement séparées par un élément de butée capable de délimiter une surface de butée pour le tampon de centrage (40), dans lequel l'élément de butée comprend un corps cylindrique (30) qui présente un diamètre externe inférieur à un diamètre interne de la gaine cylindrique (21) et un diamètre interne inférieur à un diamètre externe d'au moins une surface de butée (41) du tampon de centrage (40) et qui est inséré à l'intérieur de la gaine cylindrique (21), de sorte qu'une extrémité libre (31) de celui-ci délimite une butée pour la surface de butée (41) du tampon de centrage (40) **caractérisé en ce qu'**une chambre annulaire (S0) est définie entre le corps cylindrique (30) et la gaine cylindrique (21), ladite chambre annulaire (S0) communiquant avec le volume interne du corps cylindrique (30) via au moins une ouverture radiale traversante (34) réalisée dans le corps cylindrique (30).

2. Cylindre hydraulique (20) selon la revendication 1, dans lequel le corps cylindrique (30) présente une longueur axiale sensiblement égale à la longueur axiale de la première partie axiale (A) de la gaine cylindrique (21) et est situé à l'intérieur de la gaine cylindrique (21) de façon à recouvrir l'intérieur de sensiblement toute la première partie axiale (A).

3. Cylindre hydraulique (20) selon la revendication 1 ou 2, dans lequel le piston (240) est inséré sensiblement étroitement à l'intérieur du corps cylindrique (30) de façon à pouvoir coulisser à l'intérieur de ce dernier et subdiviser le volume interne de la première partie axiale (A) en une première chambre (S1) et une deuxième chambre (S2), séparées et ayant un volume variable.

4. Cylindre hydraulique (20) selon l'une quelconque des revendications précédentes, **caractérisé en ce qu'**il comprend au moins un joint d'étanchéité annulaire (33) interposé entre la gaine cylindrique (21) et le corps cylindrique (30).

5. Cylindre hydraulique (20) selon la revendication 1, dans lequel l'orifice traversant (34) est capable de placer la chambre annulaire (S0) en communication avec la première chambre (S1) ou la seconde chambre (S2).

6. Cylindre hydraulique (20) selon l'une quelconque des revendications précédentes, dans lequel le tampon de centrage (40) est sensiblement étroitement inséré à l'intérieur de la seconde partie axiale (B) de la gaine cylindrique (21) de façon à pouvoir coulisser à l'intérieur de cette dernière et subdiviser le volume interne de la seconde partie axiale en une troisième chambre (S3) et une quatrième chambre (S4), séparées l'une de l'autre et ayant des volumes variables.

7. Cylindre hydraulique (20) selon l'une quelconque des revendications précédentes, dans lequel le tampon de centrage (40) est associé de manière coulissante sur la tige (24).

8. Cylindre hydraulique (20) selon l'une quelconque des revendications précédentes, **caractérisé en ce qu'**il comprend un manchon (43) axialement coulissable le long de la gaine cylindrique (21) et encadré par le tampon de centrage (40) sur un côté du tampon de centrage (40) orienté vers la première partie axiale (A), dans lequel le manchon (43) présente un diamètre externe inférieur au diamètre interne du corps cylindrique (30) de façon à être insérable pour au moins une partie axiale de ce dernier à l'intérieur du corps cylindrique (30), le manchon (43) délimitant une butée axiale pour le piston (240).

9. Axe de direction (10) qui comprend au moins une paire de moyeux de direction (12, 13), **caractérisé en ce qu'**il comprend au moins un cylindre hydraulique (20) selon l'une quelconque des revendications précédentes, dans lequel les moyeux (12, 13) sont actionnés pour diriger via la tige (24) du cylindre hydraulique (20).
